# EUROPEAN PATENT APPLICATION

(11) **EP 4 446 902 A1**
(43) Date of publication of application: **16.10.2024**
(21) Application number: 22903883.1
(22) Date of filing: 21.10.2022
(51) Int. Cl.: G06F 15/02, H05K 5/02

(54) **COVER COMPONENT AND ELECTRONIC APPARATUS**

(30) Priority: 10.12.2021 JP 2021200516
(71) Applicant: Casio Computer Co., Ltd., Tokyo 151-8543 (JP)
(72) Inventor: EGUCHI Hiroki, Hamura-shi, Tokyo 205-8555 (JP)
(74) Representative: Grünecker Patent- und Rechtsanwälte PartG mbB
(86) International application number: PCT/JP2022/039345
(87) International publication number: WO 2023/105949

(57) **Abstract**

Provided are a cover component and an electronic apparatus that ensure high operability at low cost. A cover component 20 is disposed at a position to abut on at least one fastening screw 16 exposed on a back surface of a scientific calculator 10 when the cover component is attached to the back surface of the scientific calculator 10.

## Description

### TECHNICAL FIELD

The present invention relates to a cover component and an electronic apparatus.

### BACKGROUND ART

Conventionally, a cover component for protecting an electronic apparatus such as a scientific calculator is known. In this type of cover component, a protrusion for abutting on and supporting the electronic apparatus is provided (see, for example, Patent Literature 1). A soft material such as a rubber foot may be attached to a tip (abutting surface) of the protrusion so as not to scratch a main body of the electronic apparatus.

### CITATION LIST

### PATENT LITERATURE

Patent Literature 1: JP 2001-306178 A

### SUMMARY OF INVENTION

### TECHNICAL PROBLEM

However, when the soft material such as a rubber foot is provided separately from a material of the cover component, the cost increases accordingly.

The present invention has been made in view of the above circumstances, and an object of the present invention is to provide a cover component and an electronic apparatus that ensure high operability at low cost.

### SOLUTION TO PROBLEM

In order to achieve the above object, the present invention is characterized as a cover component including a protrusion disposed at a position to abut on at least one fastening member exposed on a back surface of an electronic apparatus when the cover component is attached to the back surface of the electronic apparatus.

Furthermore, the present invention is characterized as an electronic apparatus to which a cover component is attachable, the electronic apparatus including a fastening member disposed on a back surface of the electronic apparatus, wherein the fastening member is disposed at a position to abut on a protrusion formed on the cover component when the cover component is attached to the back surface of the electronic apparatus.

### ADVANTAGEOUS EFFECTS OF INVENTION

According to the present invention, it is possible to provide a cover component and an electronic apparatus that ensure high operability at low cost.

### BRIEF DESCRIPTION OF DRAWINGS

Fig. 1 is a perspective view of a scientific calculator and a cover component according to an embodiment.
Fig. 2A is a rear view of the scientific calculator, and Fig. 2B is a front view of the cover component.
Fig. 3 is an enlarged view of a periphery of a protrusion of the cover component when the cover component is attached to a back surface side of the scientific calculator.
Fig. 4 is a longitudinal sectional view of the scientific calculator when the cover component is attached to the back surface side.
Fig. 5 is a longitudinal sectional view of the scientific calculator when the cover component is attached to a front surface side.
Fig. 6A is a cross-sectional view of the scientific calculator when the cover component is attached to the back surface side, and Fig. 6B is a cross-sectional view of the scientific calculator when the cover component is attached to the front surface side.

### DESCRIPTION OF EMBODIMENTS

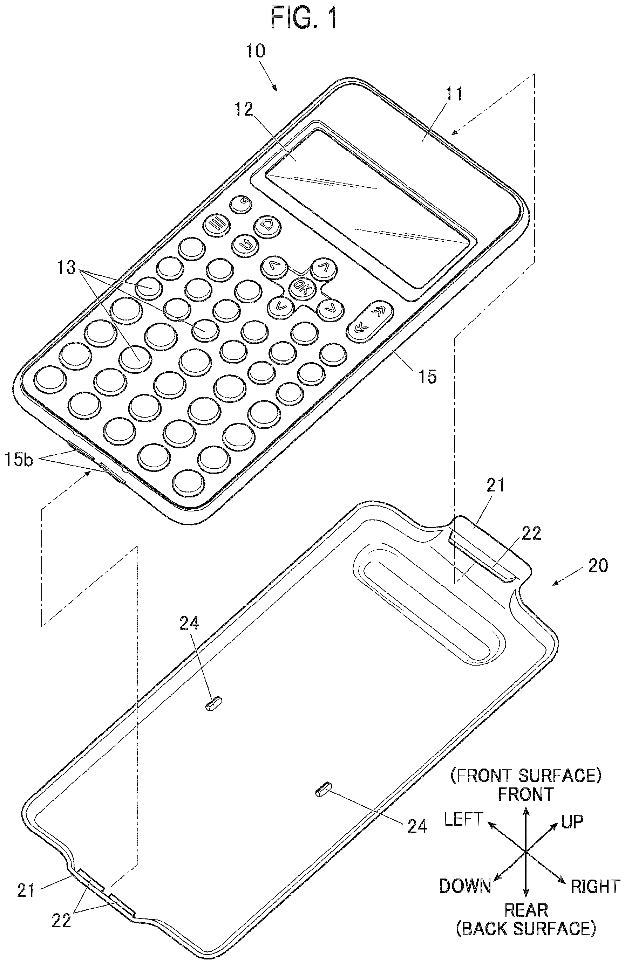

An embodiment of the present invention will be described with reference to Figs. 1 to 6.

Note that although various technically preferable limitations are given to the embodiment described below in order to carry out the present invention, the scope of the present invention is not limited to the following embodiment and illustrated examples.

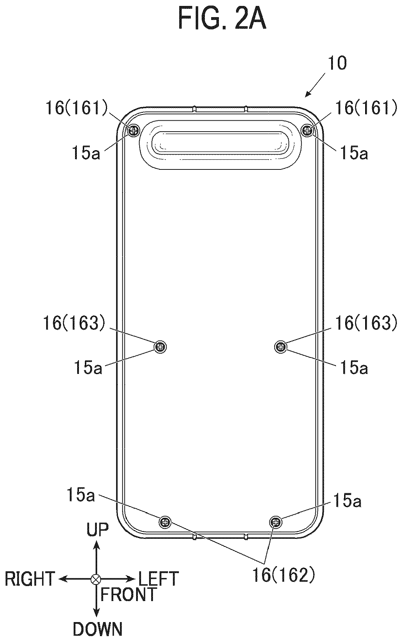

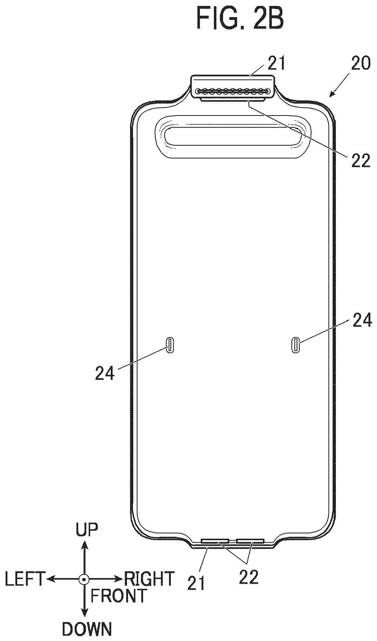

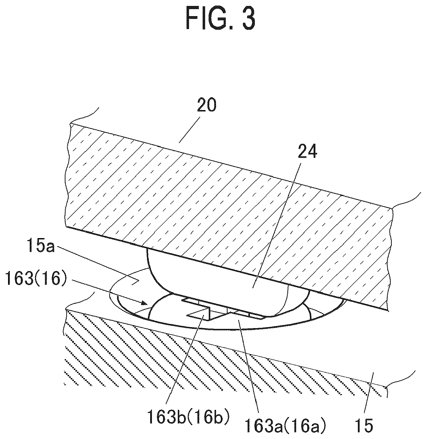

Fig. 1 is a perspective view of a scientific calculator (electronic apparatus) 10 and a cover component 20 thereof according to the present embodiment, Fig. 2A is a rear view of the scientific calculator 10, and Fig. 2B is a front view of the cover component 20. Fig. 3 is an enlarged view of a periphery of a protrusion 24 of the cover component 20 when the cover component 20 is attached to a back surface side of the scientific calculator 10.

Note that in the following description, front, rear, left, right, up, and down directions refer to the directions illustrated in the drawings. That is, the front-rear direction refers to the front surface-back surface direction (thickness direction) of the scientific calculator 10 and the cover component 20, the left-right direction refers to the width direction of the scientific calculator 10 and the cover component 20, and the up-down direction refers to the longitudinal direction of the scientific calculator 10 and the cover component 20.

In addition, as will be described later, the cover component 20 can be attached to both a front surface side and the back surface side of the scientific calculator 10. However, in the following description, unless otherwise specified, a configuration of the cover component 20 will be described assuming that the cover component 20 is in the front-rear direction when the cover component 20 is attached to the back surface side of the scientific calculator 10 as illustrated in Fig. 1.

As illustrated in Figs. 1 and 2, the scientific calculator 10 is an example of an electronic apparatus according to the present invention, and is formed in a rectangular plate shape elongated in the up-down direction. The scientific calculator 10 includes a front surface case 11 that covers a front surface (front surface) and a back surface case 15 that covers a back surface (rear surface). The front surface case 11 and the back surface case 15 are engaged in the front-rear direction to constitute a housing of the scientific calculator 10.

In the front surface case 11, a display screen 12 on which various types of information are displayed and a plurality of operating buttons 13 for receiving user operations are disposed.

A plurality of (six in the present embodiment) fastening screws 16 (heads 16a thereof) made of metal for fastening the back surface case 15 and the front surface case 11 to each other are exposed in the back surface case 15. The plurality of fastening screws 16 include two first fastening screws 161 disposed on both left and right sides of an upper end of the back surface case 15, two second fastening screws 162 disposed on both left and right sides of a lower end, and two third fastening screws 163 disposed on both left and right sides substantially at the center in the up-down direction. The head 16a of each fastening screw 16 is disposed in a recess 15a of the back surface case 15, and embedded so as not to protrude from a surface (surface other than the recess 15a) of the back surface case 15 (see Fig. 3).

The cover component 20 covers and protects a main surface (front surface or rear surface) of the scientific calculator 10. The cover component 20 is formed in a shape corresponding to a front view shape of the scientific calculator 10, that is, a rectangular plate shape elongated in the up-down direction corresponding to the longitudinal direction of the scientific calculator 10, and is formed of, for example, translucent acrylonitrile butadiene styrene (ABS) resin. A peripheral edge of the cover component 20 is curved to the front side so as to cover a peripheral edge of the scientific calculator 10 when the cover component is attached.

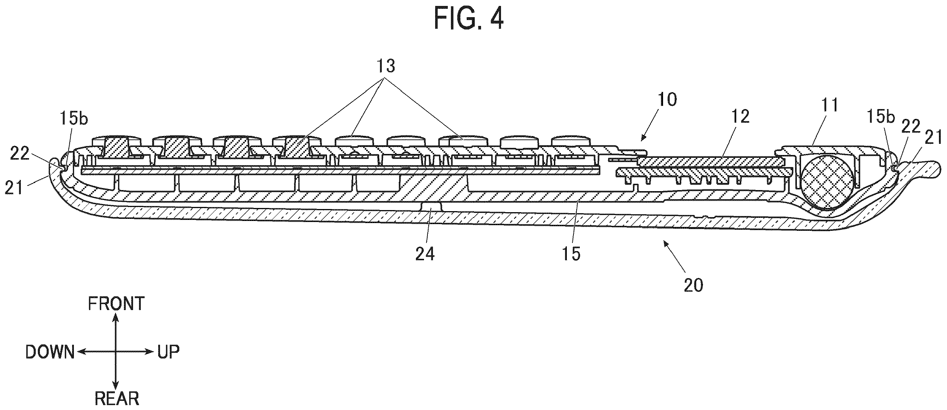

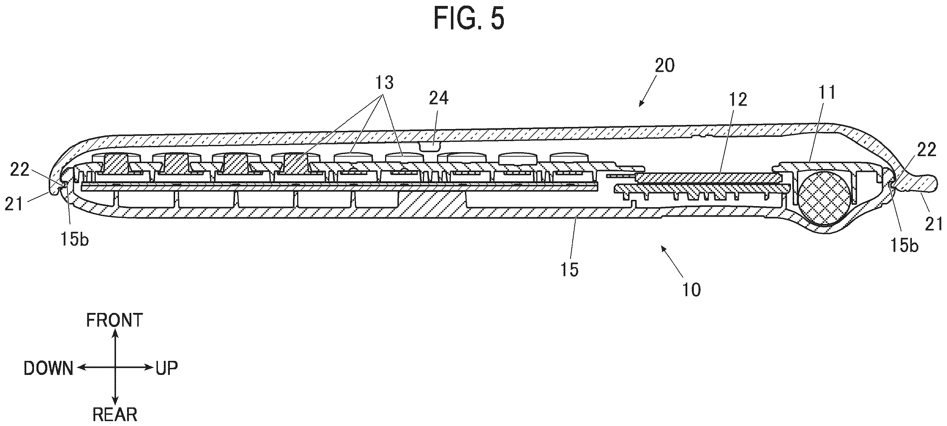

At both upper and lower ends of the cover component 20, extending portions 21 that are curved to the front side and extend beyond other peripheral edge portions are provided. A hook portion 22 protruding toward the center of the cover component 20 in the up-down direction is provided at a tip of each extending portion 21. The hook portion 22 is formed so as to be engageable, from both the front surface side and the back surface side, with a locking groove 15b formed at both upper and lower ends of the housing (back surface case 15) of the scientific calculator 10 (see Figs. 4 and 5). That is, the cover component 20 is configured to be attachable to either the front surface side or the back surface side of the scientific calculator 10 by reversing the direction in the front-rear direction.

Two protrusions 24 formed in a pillar shape slightly elongated in the up-down direction are erected on a front surface (main surface on the front surface side) of the cover component 20. The two protrusions 24 are disposed at positions corresponding to the third fastening screws 163 exposed on the rear surface of the scientific calculator 10. That is, the two protrusions 24 are disposed on the left and right sides of the cover component 20 substantially at the center in the up-down direction. Here, the phrase "positions corresponding to the third fastening screws 163" refers to positions corresponding to the third fastening screws 163 as viewed in the front-rear direction when the cover component 20 is attached to the scientific calculator 10 in a direction in which the protrusion 24 and the third fastening screw 163 face each other. Note that the position of the protrusion 24 may be any position as long as the protrusion abuts on at least one fastening screw exposed on the back surface of the scientific calculator 10 when the cover component 20 is attached to the back surface of the scientific calculator 10.

In addition, each protrusion 24 is formed at such a height that the protrusion abuts on the third fastening screw 163 (there may be some gap) when the cover component 20 is attached to the back surface side of the scientific calculator 10 and does not abut on any portion of the scientific calculator 10 when the cover component 20 is attached to the front surface side of the scientific calculator 10.

In addition, each protrusion 24 is formed integrally with a main body of the cover component 20. That is, the main body of the cover component 20 and the protrusion 24 are formed of the same material.

As illustrated in Fig. 3, at least one portion at the tip of each protrusion 24 is larger than the diameter of a head 163a of the third fastening screw 163 and smaller than the diameter of the recess 15a in which the head 163a is disposed.

In addition, each protrusion 24 is formed to have a larger length in the up-down direction and a larger width in the left-right direction than those of a hole 163b of the head 163a of the third fastening screw 163. That is, the protrusion 24 is formed in such a size that the tip thereof does not fit in the hole 163b. The hole 163b is for fitting a fastening tool (not illustrated), and is a cross hole in the present embodiment. However, the shape of the hole 163b is not particularly limited, and may be, for example, a slot, a hexagonal hole, or the like (including a groove). Note that the protrusion 24 only needs to be formed larger than the hole 163b of the head 163a of the third fastening screw 163 so as not to be fitted in the hole 163b, and may have, for example, a shape in which only one of the length in the up-down direction and the width in the left-right direction is larger than that of the hole 163b.

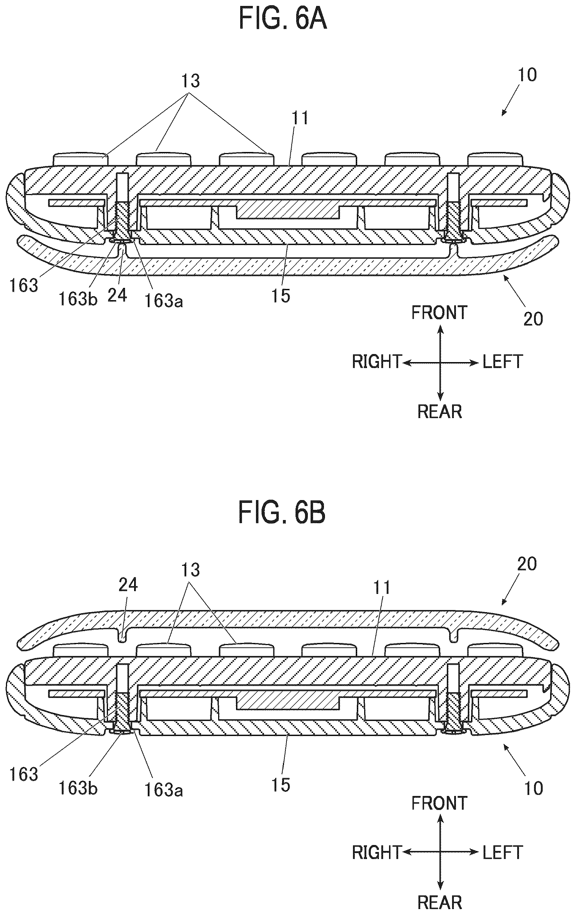

Fig. 4 is a longitudinal sectional view of the scientific calculator 10 when the cover component 20 is attached to the back surface side, and Fig. 5 is a longitudinal sectional view of the scientific calculator 10 when the cover component 20 is attached to the front surface side. In addition, Fig. 6A is a cross-sectional view of the scientific calculator 10 when the cover component 20 is attached to the back surface side, and Fig. 6B is a cross-sectional view of the scientific calculator 10 when the cover component 20 is attached to the front surface side.

As illustrated in Figs. 4 and 6A, when the cover component 20 is attached to the back surface side of the scientific calculator 10, the protrusion 24 erected on the cover component 20 is disposed at the position (position to abut on at least one fastening screw exposed on the back surface of the scientific calculator 10 when the cover component is attached to the back surface of the scientific calculator 10) corresponding to the third fastening screw 163 exposed on the rear surface of the scientific calculator 10, so that the tip of the protrusion 24 abuts on the third fastening screw 163. As a result, it is possible to avoid a situation in which the protrusion 24 comes into contact with the main body (housing) of the scientific calculator 10 and scratches the main body.

In addition, the protrusion 24 can support the scientific calculator 10 by abutting on the third fastening screw 163 substantially at the center in the longitudinal direction (up-down direction). As a result, the scientific calculator 10 can be suitably supported substantially at an intermediate position of the hook portions 22 located at the two upper and lower ends and engaging with the scientific calculator 10.

Further, as illustrated in Fig. 3, the tip of the protrusion 24 is larger than the diameter of the head 163a of the third fastening screw 163, and smaller than the diameter of the recess 15a of the back surface case 15, in which head 163a is disposed. As a result, a contact area between the protrusion 24 and the head 163a of the third fastening screw 163 can be secured while avoiding contact between the protrusion 24 and the back surface case 15.

Further, the protrusion 24 is larger than the hole 163b of the head 163a of the third fastening screw 163, that is, formed in a size that does not fit in the hole 163b. As a result, the tip of the protrusion 24 can suitably abut on the head 163a of the third fastening screw 163 without being fitted in the hole 163b.

On the other hand, when the cover component 20 is attached to the front surface side of the scientific calculator 10 by reversing the direction in the front-rear direction, the tip of the protrusion 24 does not abut on (contact with) any portion of the scientific calculator 10 as illustrated in Figs. 5 and 6B. Therefore, there is no possibility that the protrusion 24 scratches an operating surface (main surface on the front surface side) of the scientific calculator 10.

As described above, according to the present embodiment, the cover component 20 includes the protrusion 24 disposed at the position to abut on at least one fastening screw exposed on the back surface of the scientific calculator 10 when the cover component is attached to the back surface of the scientific calculator 10.

Therefore, when the cover component 20 is attached to the back surface side of the scientific calculator 10, the tip of the protrusion 24 abuts on the third fastening screw 163. As a result, it is not necessary to provide a soft material such as a rubber foot at the tip of the protrusion 24, and the scientific calculator 10 can be suitably supported while avoiding a situation in which the protrusion 24 comes into contact with the main body (housing) of the scientific calculator 10 and scratches the main body.

Therefore, high operability can be secured at low cost.

In addition, according to the present embodiment, the cover component 20 includes, at both ends in the longitudinal direction (up-down direction), the hook portions 22 engaging with the scientific calculator 10, and the protrusion 24 is disposed substantially at the center in the longitudinal direction.

As a result, the protrusion 24 abuts on the third fastening screw 163 substantially at the center in the longitudinal direction to support the scientific calculator 10. Therefore, the scientific calculator 10 can be suitably supported substantially at the intermediate position of the hook portions 22 located at the two upper and lower ends and engaging with the scientific calculator 10. In addition, the cover component 20 can be manufactured using a small amount of material such as ABS resin, and since the protrusion 24 is integrally molded with the cover component 20, the number of attachment steps and the like can also be reduced.

Therefore, high operability can be secured at low cost.

In addition, according to the present embodiment, at least one portion at the tip of the protrusion 24 is larger than the diameter of the head 163a of the third fastening screw 163 and smaller than the diameter of the recess 15a of the scientific calculator 10, in which the head 163a is disposed. As a result, a contact area between the protrusion 24 and the head 163a of the third fastening screw 163 can be secured while avoiding contact between the protrusion 24 and the back surface case 15.

In addition, according to the present embodiment, the protrusion 24 is larger than the hole 163b of the head 163a of the third fastening screw 163.

That is, the protrusion 24 is formed in a size that does not fit in the hole 163b. As a result, the tip of the protrusion 24 can suitably abut on the head 163a of the third fastening screw 163 without being fitted in the hole 163b.

In addition, according to the present embodiment, the protrusion 24 is formed at such a height that the protrusion does not abut on the scientific calculator 10 when the cover component 20 is attached to the front surface of the scientific calculator 10.

Therefore, when the cover component 20 is attached to the front surface side of the scientific calculator 10, the operating surface (main surface on the front surface side) of the scientific calculator 10 can be suitably protected without being scratched by the protrusion 24.

Note that an embodiment to which the present invention can be applied is not limited to the above-described embodiment, and it goes without saying that various modifications can be made without departing from the gist of the present invention.

For example, the shape, the number, and the like of the protrusion 24 of the cover component 20 are not particularly limited as long as the protrusion is disposed at a position corresponding to the fastening screw 16 of the scientific calculator 10. In addition, the position, the number, and the like of the fastening screw 16 are not particularly limited, and for example, the fastening screw may be made of resin or the like so as not to damage the protrusion 24.

In addition, in the present embodiment, the protrusion 24 is formed in a pillar shape slightly elongated in the up-down direction, but may be formed in a columnar shape according to the shape of the recess 15a of the scientific calculator 10. As a result, a large contact area with the head 163a of the third fastening screw 163 can be secured, and pressure generated when the protrusion 24 is in contact with the head 163a of the third fastening screw 163 can be reduced.

In addition, the cover component 20 may not be a detachable type that is detachable from the scientific calculator 10, but may be a sliding type that can slide along the main surface of the scientific calculator 10 to be attached to the front surface side or the back surface side of the scientific calculator 10.

In addition, in the above embodiment, the protrusion 24 of the cover component 20 is disposed corresponding to the position of the fastening screw on the back surface of the scientific calculator 10, but the fastening screw of the scientific calculator 10 may be disposed corresponding to the position of the protrusion 24 of the cover component 20. More specifically, the fastening screw disposed on the back surface of the scientific calculator 10 may be disposed at a position to abut on the protrusion 24 formed on the cover component 20 when the cover component 20 is attached to the back surface of the scientific calculator 10.

In addition, the electronic apparatus according to the present invention is not limited to a scientific calculator (electronic desktop calculator), and can be widely applied to general electronic apparatuses whose main surfaces are protected by cover components, such as an electronic dictionary and a smartphone.

Although some embodiments of the present invention have been described above, the scope of the present invention is not limited to the above-described embodiments, and includes the scope of the invention described in the claims and the equivalent scope thereof.

### INDUSTRIAL APPLICABILITY

The present invention is applicable to a cover component and an electronic apparatus, for example, to enable securing high operability at low cost.

### REFERENCE SIGNS LIST

- 10: Scientific calculator (electronic apparatus)
- 11: Front surface case
- 15: Back surface case
- 15a: Recess
- 15b: Locking groove
- 16: Fastening screw (fastening member)
- 16a: Head
- 16b: Hole
- 161: First fastening screw
- 162: Second fastening screw
- 163: Third fastening screw
- 163a: Head
- 163b: Hole
- 20: Cover component
- 22: Hook portion (engaging portion)
- 24: Protrusion

## Claims

1. A cover component comprising
a protrusion disposed at a position to abut on at least one fastening member exposed on a back surface of an electronic apparatus when the cover component is attached to the back surface of the electronic apparatus.

2. The cover component according to claim 1, wherein
the cover component is formed to be elongated, corresponding to a longitudinal direction of the electronic apparatus, in the longitudinal direction,
the cover component includes an engaging portion engaging with the electronic apparatus at both ends in the longitudinal direction, and
the protrusion is disposed at a center in the longitudinal direction.

3. The cover component according to claim 1 or 2, wherein
the electronic apparatus includes a recess in which a head of the fastening member is disposed, and
at least one portion at a tip of the protrusion is larger than a diameter of the head and smaller than a diameter of the recess.

4. The cover component according to any one of claims 1 to 3, wherein
the protrusion is larger than a hole of a head of the fastening member.

5. The cover component according to any one of claims 1 to 4, wherein
the protrusion is formed at such a height that the protrusion does not abut on the electronic apparatus when the cover component is attached to a front surface of the electronic apparatus.

6. The cover component according to any one of claims 1 to 5, wherein
the protrusion is disposed at a plurality of positions.

7. The cover component according to any one of claims 1 to 6, wherein
a main body of the cover component and the protrusion are formed of a same material.

8. The cover component according to any one of claims 1 to 7, wherein
the protrusion can support the electronic apparatus by abutting on the fastening member.

9. An electronic apparatus to which a cover component is attachable, the electronic apparatus comprising
a fastening member disposed on a back surface of the electronic apparatus, wherein
the fastening member is disposed at a position to abut on a protrusion formed on the cover component when the cover component is attached to the back surface of the electronic apparatus.
